# EUROPÄISCHE PATENTANMELDUNG

(11) **EP 1 238 871 A2**
(43) Veröffentlichungstag der Anmeldung: **11.09.2002**
(21) Anmeldenummer: 02004304.8
(22) Anmeldetag: 28.02.2002
(51) Int. Cl.: B60R 21/20

(54) **Gassack-Modul**

(30) Priorität: 08.03.2001 DE 20104044 U
(71) Anmelder: TRW Automotive Safety Systems GmbH & Co. KG, 63743 Aschaffenburg (DE)
(72) Erfinder: Heindl, Ralf, 63743 Aschaffenburg-Obernau (DE)
(74) Vertreter: Kitzhofer, Thomas, Dipl.-Ing.

(57) **Zusammenfassung**

Die Erfindung betrifft ein Gassack-Modul, mit einem Aufnahmegehäuse (10) für einen Gassack (34), einem Gasgenerator (42) und einem topfförmigen Diffusor (20), der den Gasgenerator (42) umgibt und einen Aufnahmeraum (32) für den Gassack (34) beschränkt Das Gassack-Modul ist dadurch gekennzeichnet, daß der Diffusor (20) einen radialen Flansch (24) hat, mit dem er unmittelbar am Aufnahmegehäuse (10) unter Bildung eines ringförmigen Bodens (24) zum Verschließen des Aufnahmegehäuses (10) befestigt ist. Der Diffusor (20) ragt in das Innere des Aufnahmegehäuses (10) und bildet einen von Seiten des Bodens aus offenen Gasgeneratorraum (40).

## Beschreibung

Die Erfindung betrifft ein Gassack-Modul, mit einem Aufnahmegehäuse für einen Gassack, einem Gasgenerator und einem topfförmigen Diffusor, der den Gasgenerator umgibt und einen Aufnahmeraum für den Gassack beschränkt.

Derartige Gassack-Module werden insbesondere im Lenkrad des Fahrzeugs eingesetzt. Der Diffusor begrenzt radial innenseitig einen ringförmigen Aufnahmeraum für den Gassack, wobei der Aufnahmeraum radial außenseitig von einer Seitenwand des Aufnahmegehäuses definiert ist. Im Stand der Technik wird am Aufnahmegehäuse ein Bodenblech befestigt, an dem der Diffusor, der Gasgenerator und ein ggf. im Inneren des Gassacks angeordneter Haltering befestigt sind.

Aufgabe der Erfindung ist es, ein Gassack-Modul zu schaffen, das einfacher aufgebaut ist und das vor allem eine sehr einfache Montage erlaubt.

Dies wird bei einem Gassack-Modul der eingangs genannten Art dadurch erreicht, daß der Diffusor einen radialen Flansch hat, mit dem er unmittelbar am Aufnahmegehäuse befestigt ist und der einen ringförmigen Boden zum Verschließen des Aufnahmegehäuses bildet, und daß der Diffusor in das Innere des Aufnahmegehäuses ragt und einen von Seiten des Bodens offenen Gasgeneratorraum bildet.

Beim erfindungsgemäßen Gassack-Modul bildet der Diffusor den Boden für das Aufnahmegehäuse, so daß das zuvor beschriebene Bodenblech komplett entfallen kann. Da dadurch der Diffusor auch den Abschluß des Aufnahmegehäuses bildet, kann ein von der Seite des Bodens aus offener Gasgeneratorraum entstehen, so daß der Gasgenerator am Ende der Montage einfach bodenseitig in den Gasgeneratorraum, sozusagen als letztes zu montierendes Teil, eingeführt werden kann. Damit ist es auch möglich, die gewünschte möglichst lange Trennung im Handling zwischen Gasgenerator und dem restlichen Gassack-Modul zu gewährleisten.

Der Gasgenerator ist bodenseitig in den Gasgeneratorraum eingeführt und am Flansch des Diffusors befestigt. Die Befestigung von unten schafft eine gute Zugänglichkeit für die Befestigungsmittel. Vorzugsweise liegt der Gasgenerator vollständig im Gasgeneratorraum.

Der Flansch des Diffusors hat gemäß einer Ausführungsform einen umgebogenen, axialen Abschlußrand, mit dem er an der Seitenwand des Aufnahmegehäuses befestigt ist. Das Aufnahmegehäuse muß damit keinen radial einwärts ragenden Abschnitt aufweisen, der einen Teil des Bodens bildet, was die Herstellung des Aufnahmegehäuses erleichtert.

Das Aufnahmegehäuse besteht vorzugsweise aus einer umlaufenden Seitenwand und einer einstückig daran angeformten Frontwand mit einer vorgegebenen Öffnungsklappe zum Austritt des Gassacks. Die Öffnungsklappe wird dadurch gebildet, daß die Frontwand vorgegebene Aufreißlinien mit Materialschwächungszonen besitzt. Das Gassack-Modul wird also großteils durch nur zwei einfach herzustellende Teile gebildet, nämlich durch das Aufnahmegehäuse, welches topfförmig ausgebildet ist, und den topfförmigen Diffusor, der von der Rückseite her eingeschoben wird und dessen Flansch an der Seitenwand des Aufnahmegehäuses befestigt ist.

Die Befestigung des Gassacks am Gassack-Modul erfolgt beispielsweise mittels eines im Inneren des Gassacks angeordneten Halterings, der am Flansch des Diffusors befestigt ist. Der Haltering hält dann den Rand der sogenannten Einblasöffnung, über die Gas in das Innere des Gassacks einströmt, am Gassack-Modul.

Bevorzugt wird das Gassack-Modul auch mit einem Schwingungsdämpfer bestückt, indem der Gasgenerator über ein elastomeres Dämpfungsteil mit seinem Befestigungsflansch verbunden ist. Im Inneren des Diffusors kann dann der Gasgenerator ungestört schwingen, denn er besitzt einen ausreichenden Abstand zum Diffusor.

Weitere Merkmale und Vorteile der Erfindung ergeben sich aus der nachfolgenden Beschreibung und aus der nachfolgenden Zeichnung, auf die Bezug genommen wird. Die Zeichnung zeigt einen schematischen Querschnitt durch ein erfindungsgemäßes Gassack-Modul.

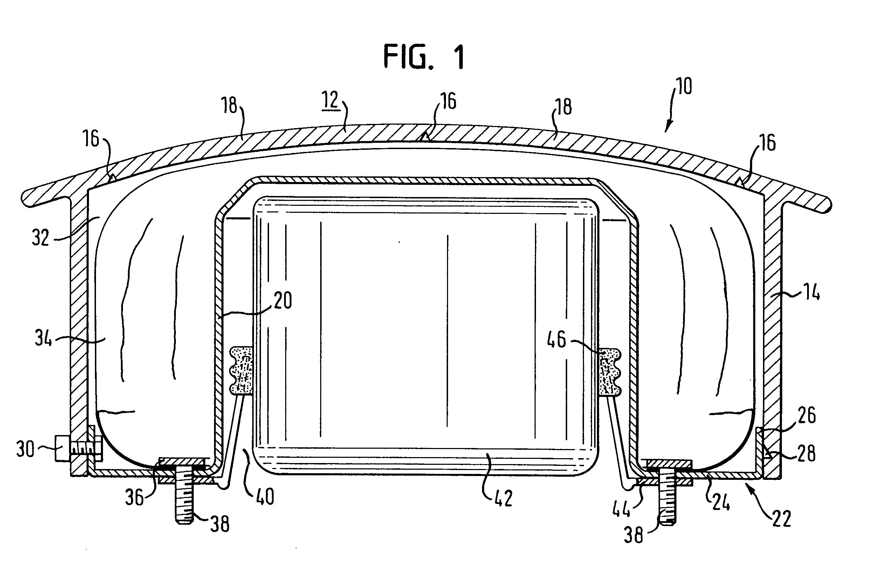

In Figur 1 ist ein Gassack-Modul für ein Fahrzeuglenkrad dargestellt, das ein topfförmiges Aufnahmegehäuse 10 mit einer Frontwand 12 und einer einstückig daran angeformten, umlaufenden Seitenwand 14 aufweist. Die Frontwand 12 hat mehrere Schwächungszonen 16, die mehrere Öffnungsklappen 18 definieren, die Abschnitte der Frontwand 12 bilden.

Das Gassack-Modul weist darüber hinaus einen topfförmigen Diffusor 20 auf, der von der offenen Bodenseite 22 des Aufnahmegehäuses 10 in dieses eingeführt ist. Der Diffusor hat an seinem bodenseitigen Ende einen radialen Flansch 24, der nach außen bis zur Seitenwand 14 ragt und in diesen Bereich einen umgebogenen, axial verlaufenden Abschlußrand 26 besitzt, an dem er über eine Rastverbindung 28 oder eine Schraubverbindung 30 fest am Aufnahmegehäuse 10 befestigt ist. Der Flansch 24 schließt in etwa bündig mit dem unteren Rand der Seitenwand 14 ab und bildet einen ringförmigen Boden zum Verschließen des Aufnahmegehäuses 10, denn der Diffusor 20 ist rückseitig offen und hat somit eine Einführöffnung für den Gasgenerator 42. Der Diffusor ist ein Blechteil, das mehrere Durchströmöffnungen hat und vom Gasgenerator seitlich wie auch axial beabstandet ist. Zwischen dem Aufnahmegehäuse 10 und dem Diffusor 20 wird ein abgeschlossener Raum gebildet, der als ringförmiger Aufnahmeraum 32 für einen Gassack 34 bezeichnet wird. Im Inneren des Gassacks 34, am Rand der sogenannten Einblasöffnung ist ein Haltering 36 angeordnet, an dem rückseitig vorstehende Gewindebolzen 38 angebracht sein können. Die Haltebolzen 38 erstrecken sich durch Öffnungen im Flansch 24.

Dadurch, daß der Diffusor 20 bodenseitig offen ist, wird ein bodenseitig offener Gasgeneratorraum 40 gebildet. Von der Bodenseite aus wird am Ende der Montage einfach ein Gasgenerator 42 in den Gasgeneratorraum 40 eingeführt. Der Gasgenerator 40 hat eine zylindrische Gestalt und einen zuerst in Richtung des Bodens und anschließend radial nach außen verlaufenden Befestigungsflansch 44. Der Befestigungsflansch 44 ist über ein elastomeres Dämpfungsteil 46 mit dem Gasgenerator 42 gekoppelt, um den Gasgenerator 42 schwingungsentkoppelt im Gasgeneratorraum 40 unterzubringen. Der Befestigungsflansch 44 liegt bodenseitig unmittelbar am Flansch 24 an, und die Schraubbolzen 38 ragen auch durch entsprechende Öffnungen im Befestigungsflansch 44.

Die Schraubbolzen 38 können auch zur Befestigung des gesamten Moduls am Lenkrad verwendet werden.

Das gezeigte Gassack-Modul ist sehr einfach aufgebaut und besteht aus sehr wenigen, einfach zu montierenden Teilen. Die Stabilität des Aufnahmegehäuses wird durch den Diffusor 20 erzielt, dessen Flansch 24 den Boden des Aufnahmegehäuses bildet und dieses schließt.

Das Gassack-Modul baut axial sehr kurz, denn der Gasgenerator 42 steht bodenseitig nicht gegenüber dem Aufnahmegehäuse vor.

## Patentansprüche

1. Gassack-Modul,
mit einem Aufnahmegehäuse (10) für einen Gassack (34),
einem Gasgenerator (42) und
einem topfförmigen Diffusor (20), der den Gasgenerator (42) umgibt und einen Aufnahmeraum (32) für den Gassack (34) beschränkt,
**dadurch gekennzeichnet,**
**daß** der Diffusor (20) einen radialen Flansch (24) hat, mit dem er unmittelbar am Aufnahmegehäuse (10) befestigt ist und der einen ringförmigen Boden (24) zum Verschließen des Aufnahmegehäuses (10) bildet, und
**daß** der Diffusor (20) in das Innere des Aufnahmegehäuses (10) ragt und einen von Seiten des Bodens aus offenen Gasgeneratorraum (40) bildet.

2. Gassack-Modul nach Anspruch 1, **dadurch gekennzeichnet, daß** der Gasgenerator (42) bodenseitig in den Gasgeneratorraum (40) eingeführt und am Flansch (24) des Diffusors (20) befestigt ist.

3. Gassack-Modul nach Anspruch 1 oder 2, **dadurch gekennzeichnet, daß** der Flansch (24) des Diffusors (20) einen umgebogenen, axialen Abschlußrand (26) hat, mit dem er an einer Seitenwand (14) des Aufnahmegehäuses (10) befestigt ist.

4. Gassack-Modul nach einem der vorhergehenden Ansprüche, **dadurch gekennzeichnet, daß** das Aufnahmegehäuse (10) aus einer umlaufenden Seitenwand (14) und einer einstückig daran angeformten Frontwand (12) mit einer vorgegebenen Öffnungsklappe (18) zum Austritt des Gassacks (34) besteht.

5. Gassack-Modul nach einem der vorhergehenden Ansprüche, **dadurch gekennzeichnet, daß** der Gassack (34) mittels eines in seinem Inneren angeordneten Halterings (36) am Flansch (24) des Diffusors (20) befestigt ist.

6. Gassack-Modul nach einem der vorhergehenden Ansprüche, **dadurch gekennzeichnet, daß** der Gasgenerator (42) über ein elastomeres Dämpfungsteil (46) mit seinem Befestigungsflansch (44), mit dem er am Flansch (24) befestigt ist, verbunden ist.
